# EUROPÄISCHE PATENTANMELDUNG

(11) **EP 0 632 249 A1**
(43) Veröffentlichungstag der Anmeldung: **04.01.1995**
(21) Anmeldenummer: 94109594.5
(22) Anmeldetag: 22.06.1994
(51) Int. Cl.: G01B 7/28, G01M 13/02, B23F 23/12

(54) **Verfahren und Vorrichtung für die Ermittlung des Summenteilungsfehlers eines Zahnrades**

(30) Priorität: 29.06.1993 DE 4321448
(71) Anmelder: Kapp GmbH & Co KG, Werkzeugmaschinenfabrik, D-96450 Coburg (DE)
(72) Erfinder: Beckering, Hermann, Dipl.-Ing., D-96482 Ahorn (DE)
(74) Vertreter: Stenger, Watzke & Ring Patentanwälte

(57) **Zusammenfassung**

Die Erfindung betrifft ein Verfahren für die Ermittlung des Summenteilungsfehlers eines Zahnrades in einer Werkzeugmaschine, insbesondere in einer Verzahnungs-Honmaschine. Vor dem Honbearbeitungs-Vorgang muß der Summenteilungsfehler des Werkstücks ermittelt werden, der dann als Störgröße bei der Drehkopplung von Werkstück- und Werkzeugachse aufgeschaltet wird. Erfindungsgemäß wird vor der Honbearbeitung ein maschineninterner Meßvorgang durchgeführt. Dabei geben Impulsgeber auf Werkzeug- und Werkstückseite über eine Umdrehung des zu bearbeitenden Zahnrads Impulse an die Maschinensteuerung, aus denen der vorhandene Summenteilungsfehler ermittelt wird. Dieser wird dann nicht nur als Störgröße der NC-Steuerung aufgeschaltet, mit ihm wird auch Ausschuß und das Zyklusende der Bearbeitung erkannt.

## Beschreibung

Die Erfindung betrifft ein Vefahren für die Ermittlung des Summenteilungsfehlers eines Zahnrades in einer Werkzeugmaschine, insbesondere in einer Vezahnungs-Honmaschine, wobei sich das zu bearbeitende Zahnrad, das um seine Drehachse rotiert und sich mit einem Abrasivwerkzeug, das um seine Drehachse rotiert, im Eingriff befindet, wodurch es zum Spanabtrag an den zu bearbeitenden Zahnflanken des Zahnrads kommt, wobei die Drehachse des Zahnrades mit einem ersten Impulsgeber und einem ersten Antriebselement und die Drehachse des Abrasivwerkzeugs mit einem zweiten Impulsgeber und einem zweiten Antriebselement verbunden sind und wobei die Impulsgeber mit der Maschinensteuerung verbunden sind, die eine interne Recheneinheit, erste und zweite Speichermittel und eine Datenausgabeeinrichtung aufweist. Des weiteren betrifft die Erfindung eine Vorrichtung zur Durchführung dieses Verfahrens.

Für die Hartbearbeitung von Zahnrädern sind verschiedene Fertigungsverfahren im Einsatz. Häufig werden wälzgefräste und gehärtete Zahnräder durch einen Schliefbearbeitungsvorgang mit der exakten Profilkontur (Evolvente) versehen. Manchmal wird dem Schleifbearbeitungsvorgang ein Zahnradhonvorgang nachgeschaltet, um noch nach dem Schleifen verbliebene Verzahnungsfehler zu minimieren. Im Hinblick auf einen ruhigen Lauf einer Verzahnung ist hierbei besonders der Summenteilungsfehler kritisch und zu beachten.

Beim Zahnradhonen rotiert das zu bearbeitende Zahnrad um seine Drehachse. Dabei kämmt es mit einem Honwerkzeug, das - im Falle einer zu bearbeitenden Außenverzahnung - die Form eines innenverzahnten Ringes hat; das Honwerkzeug rotiert ebenfalls um seine Drehachse. Die Innenverzahnung des Honwerkzeugs entspricht dabei bei Berücksichtigung der Drehbewegung zwischen Werkzeug und Werkstück genau der Gegenkontur des zu bearbeitenden Profils. Um Materialabtrag vom hartzubearbeitenden Zahnrad zu bewerkstelligen, ist das Honwerkzeug mit Abrasivpartikeln versehen. Die Bearbeitung erfolgt indem beispielsweise das Werkstück angetrieben wird und das Werkzeug mit einem gewissen Schleppmoment nachläuft. Durch Änderung der Drehrichtung werden beide Zahnflanken (Schub und Zug) bearbeitet.

Hohe Anforderungen an die Qualität der zu bearbeitenden Zahnräder haben dazu geführt, daß leistungsfähige Hartbearbeitungsverfahren benötigt werden. Hinsichtlich des Zahnradhonens wurden Lösungen ins Auge gefaßt, bei denen die beiden Drehachsen von Werkzeug und Werkstück nicht mehr unabhängig voneinander arbeiten und nur durch das Schleppmoment des nicht angetriebenen Teils verbunden sind, sondern bei denen die beiden Drehachsen durch eine definierte Kopplung verbunden sind. Diese wird vorzugsweise unter Zuhilfenahme der NC-Technik elektronisch vorgenommen ("elektronische Welle").

Das Ziel dieser Maßnahme war, die Verzahnungsfehler durch den Honvorgang nicht nur "auszumitteln", also im Rahmen der Abwälzung mit dem - fehlerarmen - Honwerkzeug zu minimieren, sondern definiert durch Zwangskopplung der Drehachsen zu eliminieren.

Umfangreiche Versuche zeigten, daß mit den bekannten Honverfahren tatsächlich gewisse Vezahnungsfehler sehr klein gemacht werden können, namentlich der Rundlauffehler, der Flankenformfehler und der Einzelteilungsfehler der Verzahnung.

Es zeigte sich aber auch, daß insbesondere der Summenteilungsfehler der Verzahnung auch bei Einsatz einer "elektronischen Welle" nach dem Honprozeß fast unverändert groß geblieben ist und in der Regel außerhalb der zulässigen Toleranzen liegt.

Jede hochgenaue Hartbearbeitung einer Verzahnung setzt daher die genaue Kenntnis des Summenteilungsfehlers voraus, so daß diesem gezielt begegnet werden kann. Hierfür bietet sich insbesondere an, den festgestellten Summenteilungsfehler "mit umgekehrten Vorzeichen" der Kopplung der Drehachsen von Werkzeug und Werkstück als Störgröße aufzuschalten (s. DE 43 17 306).

Da im Getriebebau in der Regel sehr große Lose Zahnräder gefertigt werden müssen, ist es daher erforderlich, eine Möglichkeit zu haben, mit der ohne großen (Zeit-)Aufwand in der Zahnradhonmaschine der effektiv vorliegende Summenteilungsfehler bestimmt werden kann.

Der vorliegenden Erfindung liegt daher die **Aufgabe** zugrunde, ein Verfahren für die Ermittlung des Summenteilungsfehlers eines Zahnrades in einer Werkzeugmaschine, insbesondere in einer Verzahnungs-Honmaschine, zu schaffen, das in kurzer Zeit das Ergebnis liefert, um es sowohl für die weitere Bearbeitung ("Störgrößenaufschaltung") als auch für die Beurteilung des Werkstücks heranzuziehen.

Die **Lösung** der Aufgabe durch die Erfindung ist dadurch gekennzeichnet, daß der Summenteilungsfehler durch folgende durch die Maschinensteuerung gesteuerte Arbeitsschritte bestimmt wird:
a) Drehung des Abrasivwerkzeugs (3) mittels des zweiten Antriebselements (8), so, daß das Zahnrad (1) mindestens eine volle Umdrehung (360 °) ausführt, wobei das Zahnrad (1) lastfrei, jedoch in formschlüssigem Kontakt mit dem Abrasivwerkzeug (3) mitläuft;
b) Ausgabe je eines Signals von einer ersten internen Recheneinheit (11) der Maschinensteuerung (9) an eine zweite interne Recheneinheit (12), sobald ein definierter Drehweg des Abrasivwerkzeugs (3) stattgefunden hat, der einem vorher festgelegten Bruchteil der vollen Umdrehung (360 °) des Zahnrads (1) entspricht;
c) Zählung der vom ersten Impulsgeber (5) während zweier aufeinanderfolgender Signale gemäß Arbeitsschritt b) abgegebenen Impulse in der zweiten internen Recheneinheit (12) und Abspeicherung in einem ersten Speichermittel (13) der Maschinensteuerung (9), solange, bis das Zahnrad (1) mindestens eine volle Umdrehung (360 °) ausgeführt hat;
d) Errechnung des am Zahnrad (1) vorhandenen Summenteilungsfehlers durch Auswertung der im ersten Speichermittel (13) vorhandenen Werte unter Berücksichtigung der geometrischen Beziehungen zwischen Zahnrad (1), Abrasivwerkzeug (3) und Antriebsstrang durch die interne Recheneinheit der Maschinensteuerung (9).

Durch die erfindungsgemäßen Kennzeichen wird erreicht, daß mit verfügbaren Steuerungssystemen unter Zuhilfenahme der Impulsgeber der NC-Achsen der Werkzeugmaschine sehr schnell der vorliegende Summenteilungsfehler des Zahnrads (1) ermittelt werden kann. Natürlich ist die primäre Anwendung des Wissens um diesen Fehler, diesen Wert (als Funktionsverlauf über der Winkelkoordinate des Zahnrads) bei der Honbearbeitung zugrunde zulegen; wie oben bereits skizziert, wird der Fehler als Störgröße der "elektronischen Welle" aufgeschaltet.

Gemäß eines weiteren Kennzeichens der Erfindung werden also die im ersten Speichermittel (13) der Maschinensteuerung (9) abgelegten Werte, gegebenenfalls nach einer Digital-Analogwandlung, als Störgröße bei der Bearbeitung des Zahnrads (1) mit dem Abrasivwerkzeug (3) aufgeschaltet, wobei dann die Drehachse (2) des Zahnrads (1) und die Drehachse (4) des Abrasivwerkzeugs (3) elektronisch gekoppelt sind.

Da stets gewisse Elastizitäten, d. h. nur begrenzte Steifigkeiten der einzelnen Elemente, in den Antrieben und Maschinenelementen vorhanden sind, kann es sinnvoll sein, die Störgröße, die der Kopplung der Drehachsen von Zahnrad (1) und Abrasivwerkzeug (3) aufgeschaltet wird, mit einem Verstärkungsfaktor zu multiplizieren, um eine effizientere, also kürzere Bearbeitung zu erreichen.

Da mitunter schlecht vorgearbeitete oder stark härteverzogene Zahnräder an die Hartfeinbearbeitungsmaschine gelangen, die das Abrasivwerkzeug (3) über Gebühr strapazieren, ist die Erfindung vorteilhafterweise derart weitergebildet, daß die Maschinensteuerung (9) nach Ermittlung des Summenteilungsfehlers keine Bearbeitung des Zahnrads (1) mit dem Abrasivwerkzeug (3) einleitet, wenn der Summenteilungsfehler einen vorgegebenen Maximalwert übersteigt. Hierdurch kann das Werkzeug (3) erheblich geschont werden.

Um den Arbeitsfortschritt während des Zahnradhonens zu beobachten und zu gegebener Zeit den Bearbeitungsprozeß zu beenden, ist vorgesehen, daß die Ermittlung des Summenteilungsfehlers während der Bearbeitung des Zahnrads (1) mit dem Abrasivwerkzeug (3) in vorgebbaren Zeitabständen oder kontinuierlich wiederholt wird, wobei die Abspeicherung gemäß obigem Arbeitsschritt c) in einem zweiten Speichermittel (16) der Maschinensteuerung (9) erfolgt.

Dann kann der ermittelte Wert des Summenteilungsfehlers an der Datenausgabeeinrichtung der Maschinensteuerung (9) gleichzeitig mit seiner Ermittlung angezeigt werden. Außerdem kann vorgesehen werden, daß die Maschinensteuerung (9) die Bearbeitung des Zahnrads (1) mit dem Abrasivwerkzeug (3) beendet, sobald der ermittelte Wert des Summenteilungsfehlers einen vorgegebenen Minimalwert unterschreitet.

Alle obigen Ausführungen gelten natürlich auch dann, wenn bei der Durchführung des obigen Arbeitsschrittes a) das Zahnrad (1) mittels des ersten Antriebselements (7) gedreht wird und das Abrasivwerkzeug (3) lastfrei, jedoch in formschlüssigem Kontakt mit dem Zahnrad (1) mitläuft.

In der Zeichnung ist ein Ausführungsbeispiel dargestellt, an dem das erfindungsgemäße Verfahren erläutert werden soll. Es zeigt
- Fig. 1:: Werkstück und Werkzeug im Eingriff während des Bearbeitungsprozesses,
- Fig. 2:: Schema des Vorrichtungsaufbaus für die Ermittlung des Summenteilungsfehlers und
- Fig. 3:: den Verlauf der über dem Drehwinkel von den beiden Impulsgebern eingehenden Signale.

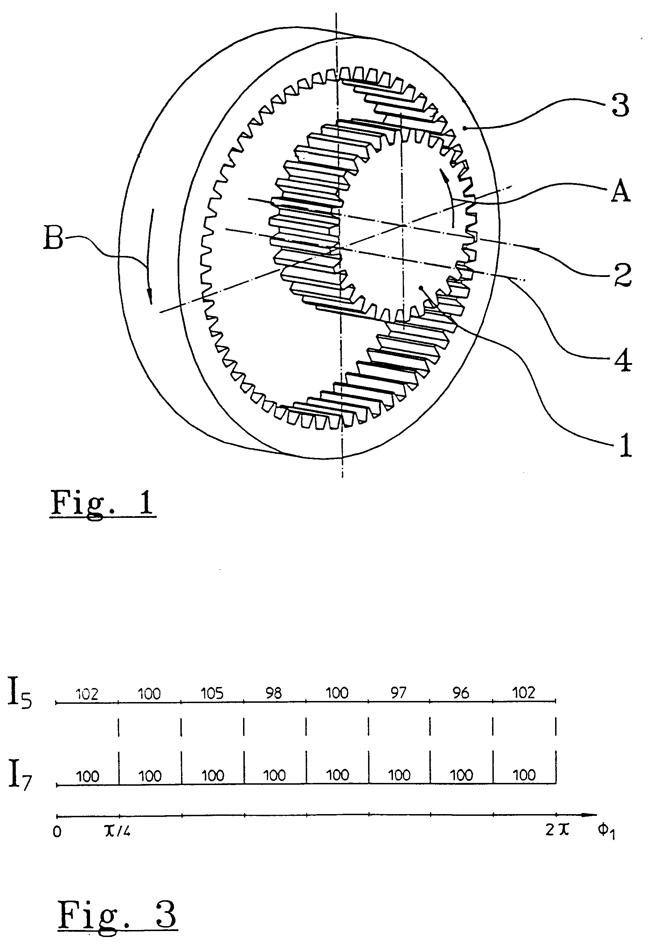

In Figur 1 ist das zu bearbeitende Zahnrad 1 zu erkennen. Es weist eine Drehachse 2 auf, um die es während des Honbearbeitsprozesses dreht (Drehrichtung A). Das Zahnrad 1 kämmt mit dem Abrasivwerkzeug 3, welches um seine Drehachse 4 drehen kann (Drehrichtung B). Dargestellt ist der - einfachste - Fall der Bearbeitung eines Stirnzahnrades mit parallel zur Drehachse 2 verlaufenen Zähnen (Geradvezahnung). Die erfindungsgemäßen Ausführungen gelten jedoch genauso für Schrägverzahnungen und für zu bearbeitende Innenverzahnungen. Dann hat freilich das Werkzeug die Form eines außenverzahnten Stirnrades (in Figur 1 würde dann Nr. 1 das Werkzeug und Nr. 3 das Werkstück sein).

Das Abrasivwerkzeug (Honrad) 3 beinhaltet die Gegenkontur des Werkstücks 1; beim Abwälzen von Werkzeug 3 und Werkstück 1 erzeugt das Werkzeug 3 am Werkstück 1 exakt die gewünschte Profilform. Materialabtrag (Abrasion) findet dadurch statt, daß die Kontaktfläche zwischen Werkstück und Werkzeug werkzeugseitig mit Abrasivmaterial versehen ist. Zum Einsatz kann ein Werkzeug kommen, das ganz aus abrichtbarem Schleifmittel besteht und in das, z. B. mittels eines diamantbesetzten Lehrenzahnrades, die gewünschte Profilform eingebracht wurde. Das Werkzeug kann aber auch aus einem metallischen Grundkörper bestehen, der bereits exakt auf eine äquidistant kleinere Form gefertigt wurde und mit einer einlagigen Schicht aus superhartem Material besteht (z. B. CBN), mit der sich dann die exakte benötigte Werkzeugform ergibt.

Nicht dargestellt sind in Figur 1 der Impulsgeber 5, der mit der Drehachse 2 des Zahnrads 1 verbunden ist und das erste Antriebselement 6, das das Zahnrad 1 antreibt; gleichermaßen nicht dargestellt sind der Impulsgeber 7, der mit der Drehachse 4 des Abrasivwerkzeugs 3 verbunden ist und das zweite Antriebselement 8, das das Abrasivwerkzeug 3 antreibt.

Die Drehbewegung der Achsen 2 und 4 (Drehrichtungen A und B) ist elektronisch gekoppelt ("elektronische Welle"); d. h. zu jeder Winkelposition der Werkstückwelle gehört eine zugehörige Winkelposition der Werkzeugwelle, die regelungstechnisch exakt zugeordnet und positioniert wird.

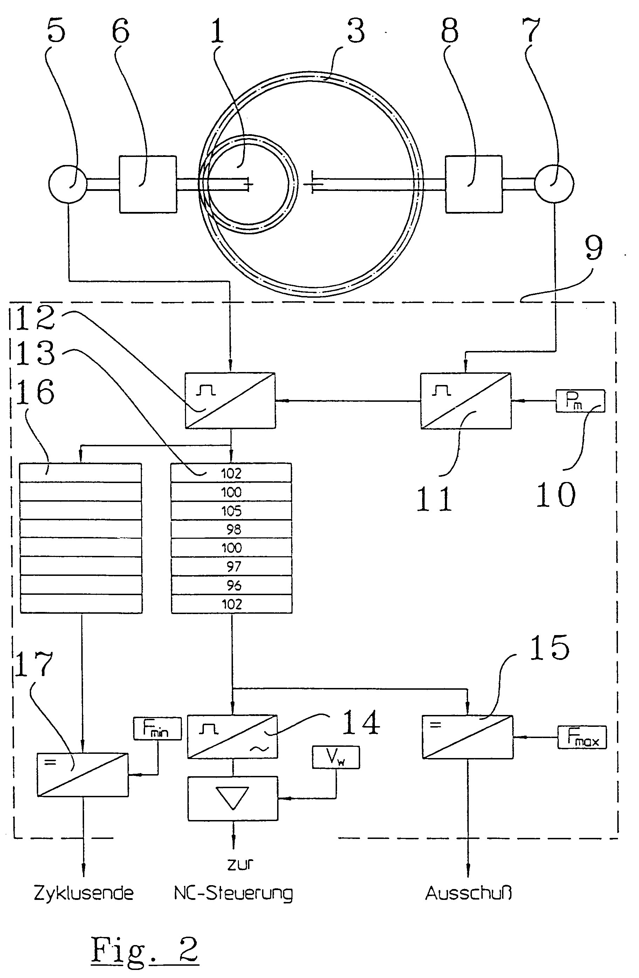

In Figur 2 ist schematisch der Vorrichtungsaufbau für die Ermittlung des Summenteilungsfehlers dargestellt Zahnrad 1 und Abrasivwerkzeug 3 befinden sich wieder im Eingriff. Zahnrad 1 wird vom ersten Antriebselement 6, Abrasivwerkzeug 3 vom zweiten Antriebselement 8 angetrieben. Zahnrad 1 ist mit dem ersten Impulsgeber 5, Abrasivwerkzeug 3 mit dem zweiten Impulsgeber 7 verbunden.

Die Maschinensteuerung 9 beinhaltet unter anderem einen Wertspeicher für den Wert Pₘ (s. u.), eine erste und zweite interne Recheneinheit 11 und 12, ein erstes und zweites Speichermittel 13 und 16, einen D/A-Wandler 14 sowie die Komparatoren 15 und 17.

Die erfindungsgemäßen Überlegungen gehen davon aus, daß das Abrasivwerkzeug 3 weitgehend fehlerfrei ist, während das zu bearbeitende Zahnrad 1 gewisse Summenteilungsfehler aufweist. Diese Annahme entspricht der Praxis, da Werkzeuge für die Zahnrad-Hartfeinbearbeitung stets in sehr hoher Qualität gefertigt werden, so daß deren - stets vorhandene -Fehler vernachlässigbar sind, verglichen mit denjenigen des Werkstücks.

Zwecks Ermittlung des Summenteilungsfehlers des Zahnrads 1 wird folgendermaßen vorgegangen:
Das Abrasivwerkzeug 3 wird mittels des zweiten Antriebselements 8 gedreht. Zahnrad 1 dreht sich lastfrei, jedoch in formschlüsigem Kontakt mit dem Werkzeug 3 mit. In einen Wertspeicher 10 der Maschinensteuerung 9 ist der Wert Pₘ vorgegeben; er gibt die Anzahl der Meßpunkte an, die - gleichmäßig über den Umfang verteilt - am Zahnrad 1 abgefragt werden sollen. Eine erste interne Recheneinheit 11, die die Anzahl der Meßpunkte und die Impulse des zweiten Impulsgebers 7 vorgegeben bekommt, berechnet unter Berücksichtigung des Zähnezahlverhältnisses von Zahnrad 1 und Abrasivwerkzeug 3 und von gegebenenfalls in den Antriebselementen vorhandenen Übersetzungen die Anzahl der Impulse, die vom zweiten Impulsgeber 7 abgegeben worden sein müssen, bis sich das Zahnrad 1 um den ersten Teilwinkel (2 Pi / Pₘ) gedreht hat. Dann gibt sie ein Signal an eine zweite interne Recheneinheit 12 ab ("Zeitpunkt der Aufnahme eines Meßpunkts").

Die zweite interne Recheneinheit 12 zählt solange, bis sie von der ersten Einheit 11 dieses Signal erhählt, die vom ersten Impulsgeber 5 eingehenden Impulse. Dieser Wert wird dann in das erste Speichermittel 13 der Maschinensteuerung 9 abgespeichert, und zwar an die erste Stelle des Speichers 13. Dieser Vorgang wiederholt sich solange, bis das Zahnrad 1 (mindestens) um eine vollständige Umdrehung (360 °) gedreht wurde; das erste Speichermittel 13 ist dann mit sovielen Werten belegt, wie es der Anzahl der Meßpunkte Pₘ entspricht, im vorliegenden schematischen Beispiel also mit 8 Werten. In der Praxis ist es erforderlich, mehrere Hundert Punkte zu wählen, um eine genügend hohe Genauigkeit zu erhalten.

In Figur 3 ist der Verlauf der von den beiden Impulsgebern 5 und 7 eingehenden Signale über dem Drehwinkel (Phi 1) des Zahnrads 1 schematisch dargestellt. Als einfaches Beispiel wurden hier wieder die mit Figur 2 korrespondierenden 8 Werte zugrundegelegt. Während des ersten Achtels der Zahnradumdrehung - berechnet ausgehend vom exakten, "idealen" Abrasivwerkzeug- zählt der zweite Impulsgeber 7 im vorliegenden Beispiel 100 Impulse (bis zum Drehwinkel Pi/4). Dann erfolgt das Signal von der ersten internen Recheneinheit 11 an die zweite Einheit 12 (Piek nach Pi/4). Bis zu diesem Zeitpunkt gingen vom ersten Impulsgeber 5 102 Impulse ein (s. Figur 3), so daß also ein Summenteilungsfehler vorliegt; dies wäre nur dann nicht der Fall, wenn vom ersten Impulsgeber ebenfalls 100 Impulse eingegangen wären.

Durch weiteres "Vermessen" des Zahnrads 1 über seinen Umfang vervollständigt sich der Inhalt des ersten Speichermittels 13, bis er in der in Figur 2 dargestellten Form vorliegt. Anschließend kann die Honbearbeitung mit Störgrößenaufschaltung vorgenommen werden: Die zu den jeweiligen Winkellagen des Zahnrads 1 korrespondierenden Werte aus dem Speicher 13 werden - mit umgekehrten Vorzeichen - bei der Drehkopplung der Bewegung von Werkzeug- und Werkstückachse aufgeschaltet. Hierfür werden die Werte aus dem Speichermittel 13 zunächst in einem D/A-Wandler 14 von digitaler Form in analoge umgewandelt. Zur Erhöhung der Effizienz des Bearbeitungsvorgang ist es angebracht, die vom D/A-Wandler an die NC-Steuerung ausgegebenen Daten mit einem Verstärkungsfaktor V_{w} zu multiplizieren, der z. B. 1,2 betragen kann.

Nach Aufnahme aller Werte in das Speichermittel 13 kann es sinnvoll sein, die dann vorhandenden Werte zunächst vor der eigentlichen Bearbeitung daraufhin zu überprüfen, ob der vorhandene Summenteilungsfehler nicht so groß ist, daß sich eine Bearbeitung nicht lohnt (Ausschuß). Hierfür ist ein Komparator 15 vorhanden, der die Bearbeitung des Zahnrads 1 erst veranlaßt, wenn alle im Speicher 13 enthaltenen Werte einen vorgegebenen Maximalfehler (Fₘₐₓ) nicht überschreiten.

Um den Arbeitsfortschritt während des Honens zu überprüfen und schließlich auch die Bearbeitung zu beenden, ist ein zweites Speichermittel 16 vorhanden, in dem oben beschriebene Messung des Summenteilungsfehlers während des Honens interaktiv in definierten Zeitabständen oder kontinuierlich wiederholt wird. Ein Komparator 17 vergleicht die soeben ermittelten Werte mit einem vorgegebenen Minimalwert (Fₘᵢₙ) für den Summenteilungsfehler und gibt Anweisung für die Beendigung der Honbearbeitung, sobald dieser Wert unterschritten ist.

Es ist am Rande anzumerken, daß die im Speichermittel (13, 16) abgelegten Impulswerte natürlich noch nicht der Summenteilungsfehler sind. Dieser ergibt sich vielmehr erst dann, wenn die gesamten geometrischen Verhältnisse von Werkzeug, Werkstück und Vorrichtung berücksichtigt werden und die ermittelten Impulswerte durch einen entsprechenden Algorithmus verarbeitet worden sind. Die oben beschriebenen Operationen können jedoch auch ohne diese Umrechnung in den "echten" Summenteilungsfehler vorgenommen werden, da die Impulsfolgen propotional zum Summenteilungsfehler sind; die Daten für die vorgegebenen Minimal- und Maximalwerte (Fₘᵢₙ und Fₘₐₓ) sind dann natürlich in entsprechende "Impulseinheiten" umzurechnen. Vorliegende Erfindung schließt insofern natürlich auch den Fall ein, daß nicht explizit berechnete Summenteilungsfehler, sondern lediglich die gespeicherte Anzahl gemessener Impulse verarbeitet wird.

Weiterhin ist zu sagen, daß die gesamte schaltungstechnische Ausführungsform in praxi noch ergänzt werden muß mit üblichen Synchronisationsvorrichtungen hinsichtlich des Starts einer Impulsfolge (ein Referenztakt muß vorgegeben werden). Derartige Techniken stellen jedoch den Stand der Technik dar, auf den die vorliegende Erfindung zurückgreift.

### Bezugszeichenliste

- 1: Zahnrad
- 2: Drehachse des Zahnrades
- 3: Abrasivwerkzeug
- 4: Drehachse des Abrasivwerkzeugs
- 5: erster Impulsgeber
- 6: erstes Antriebselement
- 7: zweiter Impulsgeber
- 8: zweites Antriebselement
- 9: Maschinensteuerung
- 10: Wertspeicher der Maschinensteuerung für Pₘ
- 11: erste interne Recheneinheit
- 12: zweite interne Recheneinheit
- 13: erstes Speichermittel
- 14: D/A-Wandler
- 15: Komparator
- 16: zweites Speichermittel
- 17: Komparator
- A: Drehrichtung des Zahnrades
- B: Drehrichtung des Abrasivwerkzeugs
- Pₘ: Anzahl der Meßpunkte über den Umfang des Zahnrads
- V_{w}: Verstärkungsfaktor
- Fₘᵢₙ: Minimalwert für Summenteilungsfehler
- Fₘₐₓ: Maximalwert für Summenteilungsfehler
- I₅: Impulse des ersten Impulsgebers
- I₇: Impulse des zweiten Impulsgebers

## Patentansprüche

1. Verfahren für die Ermittlung des Summenteilungsfehlers eines Zahnrades (1) in einer Werkzeugmaschine, insbesondere in einer Verzahnungs-Honmaschine, wobei sich das zu bearbeitende Zahnrad (1), das um seine Drehachse (2) rotiert und sich mit einem Abrasivwerkzeug (3), das um seine Drehachse (4) rotiert, im Eingriff befindet, wodurch es zum Spanabtrag an den zu bearbeitenden Zahnflanken des Zahnrads (1) kommt,
wobei die Drehachse (2) des Zahnrades (1) mit einem ersten Impulsgeber (5) und einem ersten Antriebselement (6) und die Drehachse (4) des Abrasivwerkzeugs (3) mit einem zweiten Impulsgeber (7) und einem zweiten Antriebselement (8) verbunden sind
und wobei die Impulsgeber (5, 7) mit der Maschinensteuerung (9) verbunden sind, die eine interne Recheneinheit, erste und zweite Speichermittel und eine Datenausgabeeinrichtung aufweist,
**dadurch gekennzeichnet,**
daß der Summenteilungsfehler durch folgende durch die Maschinensteuerung gesteuerte Arbeitsschritte bestimmt wird:
a) Drehung des Abrasivwerkzeugs (3) mittels des zweiten Antriebselements (8), so, daß das Zahnrad (1) mindestens eine volle Umdrehung ausführt wobei das Zahnrad (1) lastfrei, jedoch in formschlüssigem Kontakt mit dem Abrasivwerkzeug (3) mitläuft;
b) Ausgabe je eines Signals von einer ersten internen Recheneinheit (11) der Maschinensteuerung (9) an eine zweite interne Recheneinheit (12), sobald ein definierter Drehweg des Abrasivwerkzeugs (3) stattgefunden hat, der einem vorher festgelegten Bruchteil der vollen Umdrehung des Zahnrads (1) entspricht;
c) Zählung der vom ersten Impulsgeber (5) während zweier aufeinanderfolgender Signale gemäß Arbeitsschritt b) abgegebenen Impulse in der zweiten internen Recheneinheit (12) und Abspeicherung in einem ersten Speichermittel (13) der Maschinensteuerung (9), solange, bis das Zahnrad (1) mindestens eine volle Umdrehung ausgeführt hat;
d) Errechnung des am Zahnrad (1) vorhandenen Summenteilungsfehlers durch Auswertung der im ersten Speichermittel (13) vorhandenen Werte unter Berücksichtigung der geometrischen Beziehungen zwischen Zahnrad (1), Abrasivwerkzeug (3) und Antriebsstrang durch die interne Recheneinheit der Maschinensteuerung (9).

2. Verfahren nach Anspruch 1, dadurch gekennzeichnet, daß die im ersten Speichermittel (13) der Maschinensteuerung (9) abgelegten Werte, gegebenenfalls nach einer Digital-Analogwandlung, als Störgröße bei der Bearbeitung des Zahnrads (1) mit dem Abrasivwerkzeug (3) aufgeschaltet werden, wobei dann die Drehachse (2) des Zahnrads (1) und die Drehachse (4) des Abrasivwerkzeugs (3) elektronisch gekoppelt sind.

3. Verfahren nach Anspruch 2, dadurch gekennzeichnet, daß die Störgröße mit einem Verstärkungsfaktor, vorzugsweise größer als eins, aufgeschaltet wird.

4. Verfahren nach Anspruch 1, dadurch gekennzeichnet, daß die Maschinensteuerung (9) nach Ermittlung des Summenteilungsfehlers keine Bearbeitung des Zahnrads (1) mit dem Abrasivwerkzeug (3) einleitet, wenn der Summenteilungsfehler einen vorgegebenen Maximalwert übersteigt.

5. Verfahren nach einem der Ansprüche 1 bis 3, dadurch gekennzeichnet, daß die Ermittlung des Summenteilungsfehlers während der Bearbeitung des Zahnrads (1) mit dem Abrasivwerkzeug (3) in vorgebbaren Zeitabständen oder kontinuierlich wiederholt wird, wobei die Abspeicherung gemäß Arbeitsschritt c) von Anspruch 1 in einem zweiten Speichermittel (16) der Maschinensteuerung (9) erfolgt.

6. Verfahren nach Anspruch 5, dadurch gekennzeichnet, daß der ermittelte Wert des Summenteilungsfehlers an der Datenausgabeeinrichtung der Maschinensteuerung (9) gleichzeitig mit seiner Ermittlung angezeigt wird.

7. Verfahren nach Anspruch 5 oder 6, dadurch gekennzeichnet, daß die Maschinensteuerung (9) die Bearbeitung des Zahnrads (1) mit dem Abrasivwerkzeug (3) beendet, sobald der ermittelte Wert des Summenteilungsfehlers einen vorgegebenen Minimalwert unterschreitet.

8. Verfahren nach mindestens einem der Ansprüche 1 bis 7, dadurch modifiziert, daß zur Druchführung des Arbeitsschritts a) gemäß Anspruch 1 das Zahnrad (1) mittels des ersten Antriebselements (7) gedreht wird, wobei das Abrasivwerkzeug (3) lastfrei, jedoch in formschlüssigem Kontakt mit dem Zahnrad (1) mitläuft.

9. Vorrichtung zur Durchführung des Verfahrens nach mindestens einem der Patentanspüche 1 bis 8.
